# EUROPEAN PATENT SPECIFICATION

(11) **EP 2 261 383 B1**
(45) Date of publication and mention of the grant of the patent: **08.08.2018**
(21) Application number: 09007771.0
(22) Date of filing: 12.06.2009
(51) Int. Cl.: C21B 3/08, C21C 5/52, C04B 5/00, C22B 7/04, C22B 7/00

(54) **Method, installation and rotating drum to process ladle slag**
Verfahren, Installation und Drehtrommelofen zur Verarbeitung einer Schlackenpfanne
Procédé, installation et tambour rotatif pour traiter le laitier d'une poche de coulée

(43) Date of publication of application: 15.12.2010
(73) Proprietor: FERRIERE NORD S.p.A., 33010 Osoppo (UD) (IT)
(72) Inventor: Porisiensi, Sergio, 33010 Osoppo (UD) (IT); Benedetti, Bruno, 33010 Osoppo (UD) (IT)
(74) Representative: D'Agostini, Giovanni

(56) References cited:
- DE-A1- 19 645 254
- GB-A- 457 707
- GB-A- 191 319 191
- JP-A- 6 329 448
- JP-A- 52 013 493
- PORISIENSI S: "RECYCLING OF LADLE SLAG AND SPENT REFRACTORIES BY INJECTION INTO AN EAF" IRON & STEEL TECHNOLOGY, AIST, WARRENDALE, PA, US, vol. 1, no. 6, 1 June 2004 (2004-06-01), pages 63-66, XP001196040 ISSN: 1547-0423
- CHENGXIAO S ET AL: "TECHNOLOGY OF SLAG PROCESSING BY ROTARY CYLINDER AT BAOSTEEL//TECHNOLOGIE DE TRAITEMENT DES LAITIERS EN CYLINDRE TOURNANT A BAOSTEEL" REVUE DE METALLURGIE - CAHIERS D'INFORMATIONS TECHNIQUES, REVUE DE METALLURGIE. PARIS, FR, vol. 101, no. 1, 1 January 2004 (2004-01-01), pages 39-42, XP001193143 ISSN: 0035-1563

## Description

### Technical Field

The present invention relates to a method for processing ladle slag according to the characteristics of claim 1.
The present invention also relates to a rotating drum for processing ladle slag according to the characteristics of claim 2. The present invention also relates to an installation for processing ladle slag according to the characteristics of claim 11.

### Prior Art

In the field of steel production and in particular in the field of steel processing to obtain the desired chemical composition of the steel to be produced, a certain quantity of slag is obtained. While once slag was considered as a waste material and was accumulated in outdoor yards or sent to a dumpsite, also as a consequence of new disposal laws and as a consequence of raising production costs, today such slag is no longer considered as a waste material but as a by product for which a new use is sought in order to re-use it, in an effort to reach the goal of having no waste products to minimize the environmental impact of the steel production process, reducing disposal costs and, therefore, reducing total production costs.

While concerning the slag produced by blast furnaces and the slag produced by electrical arc furnaces, known as "black slag", an application has been found in the cement production cycle, in the construction of subgrades for foundation layers, in the production of bituminous conglomerates for road surfaces, the slag produced by ladles, known as "white slag", finds a more difficult application because of its different composition.

For ladle slag, or white slag, an application has been found allowing its use in the steel production cycle itself. Due to the high content of calcium and magnesium oxides the white slag can be used as a material possibly substituting lime in the steel production process in the electric arc furnace acting as a deslaging material.

Different processes have been proposed for the recycling of ladle slag, but all of them have problems and drawbacks, which the present invention aims at solving.

A first recycling process of ladle slag occurs "in hot conditions" and provides the liquid mixture containing slag and steel remaining in the ladle to be directly poured into the electric arc furnace before introducing the scrap in the furnace.

A second recycling process of ladle slag occurs "in cold conditions" and uses the so-called "slaking", that is a disintegration of the slag into a fine powder that occurs in the slag cooling phase because of the internal tensions generated by volume increase due to the allotropic phase change of one of its constituents (dicalcium silicate).

A third recycling process of ladle slag occurs "in cold conditions" and includes the hydration and carbonatation of the slag which by means of a chemical combination with the contained components causes a volume increase with a consequent disintegration of the slag into a fine powder.

Due to the fact that in these two last processes there is a production of fine powders which, if inhaled, can engender problems and respiratory diseases, the slaking operation occurs on grids located above many closed hoppers having big sizes.
JP 06329448A discloses a method for treating melted slag comprising: discharging melted slag in a pit, continuously stirring the slag simultaneously solidifying the slag, charging the solidified slag into a cooling drum with a hot conveyer, applying a proper rotation force to the cooling drum simultaneously cooling the slag, and further carrying the cooled slag to a slag-processing plant.
GB 19191 (A.D.1913) discloses an apparatus for granulating slag for use in the manufacture of cement. The liquid slag is projected into a rotating inclined cooling-drum by means of a disintegrating-wheel having its axis arranged transversely to that of the drum, air being admitted at the lower end of the drum and withdrawn, together with the gases and vapour evolved from the slag, at the opposite end of the drum. The drum is provided internally with ribs ant it is cooled by a water jacket.
Porisiensi S. publication "Recycling of ladle slag and spent refractories by injection into an "EAF" discloses a slag processing plants based on grids providing the recycling of the recovered pulverized slag which goes through belt conveyors to subsequent iron-removal and screening phases. The recovered pulverized slag is later fed to a storage silo and from this is fed into the furnace by means of injection lances.

### Problems of the Prior Art

The recycling process of ladle slag "in hot conditions" which provides the liquid mixture containing slag and steel remaining in the ladle to be directly poured into the electric arc furnace presents many drawbacks, among which the high danger of the operation of emptying the materials in a semi-melt phase inside the furnace basin, the lack of any control on the composition which can lead to difficulties in the obtainment of the desired final composition and to the lengthening of the refining time of the composition itself.

A big problem of the slag processing plants based on grids located above closed hoppers relates to the overall dimensions of the processing installation, which could preclude the installation in plants where a sufficient space is not available. On the other hand, in the case in which the space for the installation is available, however, the bulky dimensions of the plants of the prior art entail the construction of this installation to be necessarily done where said sufficiently wide space is available and not in the zone where its installation would be more appropriate to avoid the transportation of the residue material among different zones of the industrial site. In fact the residue material, due to its nature, is a material that involves an inevitable powder dispersion in the environment and would be desirable to limit as much as possible the transportation steps of the residue material, as well as the length of the paths to be covered by it to undergo the treatment. However the slag processing plants conceived and/or built up today do not allow an efficient arrangement of the plant itself because of their size.

Similarly also the recovered product is a material that involves an inevitable powder dispersion in the environment and it would be appropriate for the position of the installation to be such as to also allow a reduction of the path that the recovered material must perform to reach its final destination. In this case too, the overall dimensions of the existing processing plants do not allow an efficient positioning of the installation itself to limit the transportation of the recovered material.

Moreover the slag processing plants conceived and/or built up today are also characterised by the need for large metallic structures to make the grids and the hoppers, with consequent high costs of the processing installation as a whole.

Moreover the processes providing the hydration and carbonatation of the material for inducing the slaking cause the formation of very stable compounds which, when injected into the arc furnace, require a big quantity of energy for their use. Moreover the hydration and carbonatation process causes the formation of unpleasant smells with an additional need to locate the installation in proper far areas.

A big problem, then, relates also to the fact that the hoppers do not allow the correct passage of air for the material cooling, this involving, because of the low thermal conductivity of the slag, a slow heat transfer towards the core of the mass to be treated, thus lengthening the recycling process times and reducing the percentage of the recovered material in the form of powder which is reusable for the insufflation in the arc furnace. These problems are partially solved by adding systems for vibrating and/or mixing the material inside the hoppers. However, though partially solving the problem of the efficiency of the conversion process, said solutions are even more constructively complex because they need such material mixing systems and problems arise relative to the slag adhesion, the slag being still hot and partially solidified, both to the walls of the hopper and to said material mixing systems, with the consequent need for maintenance interventions anyhow exposing the operators to fine powders which are present in the hoppers.

### Aim of the invention

The aim of this invention is to supply a machine, an installation and a process for processing ladle slag that in a small space allows an efficient ladle slag, or white slag, recovery processing, for the following insufflation of the same in furnaces as a substitute material for the lime acting as a deslaging material.

### Concept of the invention

The aim is reached with the characteristics of the main claim. The dependent claims represent advantageous solutions.

### Advantageous effects of the invention

The solution according to the present invention, by the considerable creative contribution the effect of which constitutes an immediate and not negligible technical progress, presents advantages from the point of view of the space required by the machine for processing ladle slag as a whole. This has advantageous effects both due to the fact that an efficient recovery and recycling of the slag is allowed also in the plants where the available space does not allow the installation of a prior art system for processing slag and because the installation is allowed in the most suitable plant area to strongly reduce both the paths relative to the transportation of the slag from the ladle emptying zone and the paths relative to the transportation of the recycled material for the following insufflation in the furnace. This also has a consequence on the reduction of the installation costs because, as a result, it does not require the installation of conveying systems, such as, only by way of example, conveyor belts having an excessive length, therefore involving a lower total cost of the whole ladle slag recycling installation.

Moreover, the compactness of the solution according to the present invention allows the installation inside an existing building, therefore involving further benefits from an economical point of view, because it does not require the construction of a new building intended to house the installation for processing ladle slag, and from a point of view of the space needed by the industrial installation as a whole.

Moreover, a considerable cost reduction is due to the fact that the machine for processing ladle slag according to the present invention does not require the construction of complex carpentries and metallic structures, as required, on the contrary, by the ladle slag recycling plants of the prior art which are provided with complex series of big closed hoppers internally equipped with grids.

Moreover the machine according to the present invention considerably reduces the problems of the plants of the prior art relative to the adhesion of the slag, still hot and partially solidified, both to the walls of the hopper and to the possible material mixing systems.

The separation and selection process of the materials contained in the slag is also more efficient with respect to the systems of the prior art.

From the point of view of the efficiency of the separation process of ladle slag, a more effective separation occurs between the recovered material and the fine powders to be recycled by means of insufflation in the furnace.

Moreover, advantageously the machine according to the present invention also reduces the exposure of the operators both to the risks relative to the exposure to hot materials and to fine powders which, if inhaled, can cause problems and respiratory diseases.

Moreover, there are important environmental advantages both because the need to dispose the waste material is eliminated and under the aspect of the reduction of the powders released in the environment.

A further economical advantage derives from the recycling of the processed slag as a replacement material for the deslaging materials which should be added in the furnace charging phases and that are now partially if not totally replaced by the material recovered by means of the ladle slag processing.

Advantages in the steel making process as a whole are also present due to the improvement of the foaming properties of the deslaging materials coming from the ladle slag recycling with respect to the conventional
deslaging materials.

### Description of the Drawings

A practical embodiment is described hereafter with reference to the included drawings to be considered as a non-limitative example of the present invention in which:
Fig. 1 represents the machine for processing ladle slag made according to the present invention.
Fig. 2 represents a block diagram showing the method for processing ladle slag and its recycling according to the present invention.
Fig. 3 represents a block diagram showing the steel making process integrating the method for processing ladle slag and its recycling according to the present invention.
Fig. 4 represents a schematic view of a steel making plant integrating a machine for processing ladle slag according to the present invention.
Fig. 5 represents a detail of the machine for processing ladle slag according to the present invention.

### Description of the Invention

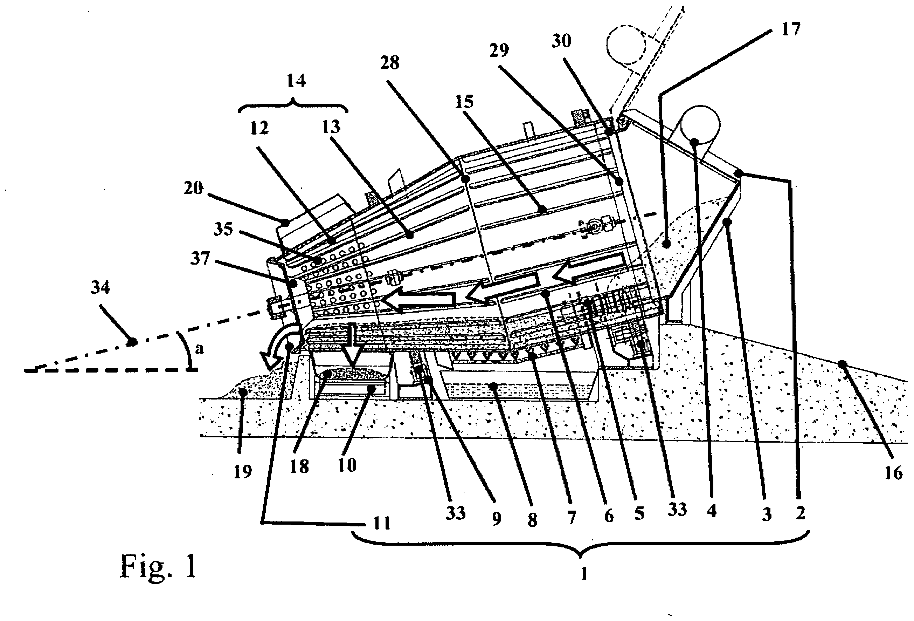

The machine for processing ladle slag (1) according to the present invention (Fig. 1) consists of a reactor consisting of an internally hollow rotating drum (6) made up of an internally hollow cylindrical part (15) and an internally hollow frusto-conical part (14) with parallel bases having a circular base, the diameter of the bigger circular base (28) of said frusto-conical part (14) being equal to the diameter of the cylindrical part (15), said bigger circular base (28) of said frusto-conical part (14) being welded at one of the circular bases of said cylindrical part (15), said cylindrical part (15) and said frusto-conical part (14) being thus integral with each other, the central axis of said cylindrical part (15) and the central axis of said frusto-conical part (14) being coincident and constituting the rotational axis (34) of said rotating drum (6). The circular base (29) of said cylindrical part (15) opposite with respect to said frusto-conical part (14) is closed by means of the coupling (30) with a fixed charging channel (3) and a charging cover (2) movable between at least two positions, said coupling (30) being such as to allow the free rotation of said rotating drum (6) with respect to said fixed charging channel (3) and said charging cover (2) movable between at least two positions, one position of which is an open position intended to allow the charging of the material on said fixed charging channel (3) and a closed position intended to seal the charging intake of said rotating drum (6).

It will be apparent that, although in the illustrated embodiment said rotating drum (6) is represented as consisting of a cylindrical part (15) and a frusto-conical part (14), other shapes are allowed for said rotating drum, such as a cylindrical shape only or a frusto-conical shape only, the illustrated embodiment being the preferred one.

On the upper part of the cover a fume hood (4) is present whose function will be illustrated in the following of the present description. However, it will be apparent to those skilled in the art that while in the illustrated embodiment the fume hood (4) is shown as being integral with said movable charging cover (2), in a different embodiment, said fume hood (4) can be integral with a fixed part of the charging intake closing system of the rotating drum (6) in order to be able to maintain an effective suction of fumes and powders coming both from inside the rotating drum (6) and from the charging channel (3) when the charging cover (2) is in an open position.

Said rotating drum (6) is supported by wheels (33) which allow the rotation of said rotating drum (6) on its rotation axis (34).

In the illustrated embodiment the rotating drum is placed so that the rotational axis (34) is not parallel with respect to the ground, but it is inclined by an angle "a" corresponding to half of the opening angle of the cone corresponding to said frusto-conical part (14), in such a way that the side surface of the frusto-conical part (14) is parallel to the ground at its lower portion. However, it will be apparent that solutions are also allowed with lower or greater values for the angle "a" relative to the inclination of the rotation axis (34) with respect to the ground, as well as solutions in which the machine (1) as a whole is supported with respect to the ground by means intended to allow the variation of said of the angle "a" relative to the inclination of the rotation axis (34) with respect to the ground both during the operation of the machine (1) when the rotating drum (6) rotates, to allow the adaptability of the parameters of the method for processing slag together with the rotation speed of the drum according to the slag type to be treated, and in the maintenance phases of the machine (1) to allow a complete and faster emptying of the rotating drum (6).

The end of the frusto-conical part (14) having a smaller diameter base is closed by an openable door (11) which rotates together with the rotating drum (6), said door closing the rear exit throat (37).

At least one portion of the rotating drum (6) and the rotating drum (6) as a whole can be cooled by means of a cooling system (7) consisting of a series of water sprays oriented on the external shell of the rotating drum (6). In the illustrated embodiment said cooling system (7) is located below the rotating drum (6) the sprays being oriented upwards. A collection basin (8) allows the collection of water.

In a different embodiment, not shown, the cooling system (7) can even be integral with the rotating drum (6), consisting of, for example, cooling plates within which ducts are obtained for the circulation of a cooling fluid, said cooling fluid being successively sent to a heat exchanger to dissipate the removed heat, said exchanger being possibly located even in a remote position with respect to said rotating drum (6), the connection between said heat exchanger and said cooling system (7) occurring for example through a fifth-wheel which allows the connection of hydraulic users on rotating devices.
In a different embodiment the cooling system (7) can even be omitted, the cooling of the rotating drum (6) occurring by means of convection and radiation.

The rotation movement of the rotating drum (6) occurs by means of rotation control means (5) which in the illustrated embodiment are a toothed crown traction system surrounding the rotating drum (6), the sliding occurring, as previously explained, on guides supported by idle wheels (33) mounted on a weighing system (9) made by means of load cells.

In order to contain the powders generated during the process the holed conical part (12) is enclosed within a fixed sheet wall plug (20) which avoids powder dispersion from the calibrated holes (35) located on said holed conical part (12) of the rotating drum (6). Said wall plug (20) is open only below the rotating drum (6) in order to allow the falling by gravity of the material on an underlying conveyor belt (10).

In order to avoid powder dispersion during the transportation phase said conveyor belt (10) is closed along its whole transport path between the point below the rotating drum (6) and the downstream discharge point which will be described in the following of the present description.

The operation of the machine for processing slag (1) occurs (Fig. 1) by opening the charging cover (2), introduction of the solidified ladle slag (17) through the charging channel (3). Inside the rotating drum (6) the cooling and slaking process occurs with the separation of the fine particles from the metallic crust; this transformation is favoured by the movement impressed to the material by means of the rotating drum (6) and by an airflow introduced in the conical part (14) and sucked by the fume hood (4) located on the top of the cylindrical part (15). The material advances (according to the direction indicated by the arrows of Fig. 1) in the rotating drum both by gravity due to the inclination of the cylindrical part (15) and due to the pushing effect given by the upstream material, the downward sliding of the material being favoured also by the continuous rotation action of the rotating drum (6). The slaked material (18) comes out of the calibrated holes (35) located at the end part of the rotating drum (6) and is collected by the conveyor belt (10), while the metallic crusts remain inside the rotating drum (6). Cyclically, for example twice a day or with a frequency depending on the number of the performed charging operations and on the material quantity of each charge, the crusts (19) will be extracted by opening the door (11). Advantageously the airflow introduced into the conical part (14) and sucked by the fume hood (4) is generated by the fume hood (4) itself which sucks air from the environment around the machine through said calibrated holes (35) located on said holed conical part (12) of the rotating drum (6). This solution is particularly advantageous because it further limits the risk of possible fine powder dispersions in the surrounding environment, said fine powder dispersions being able to occur only through said calibrated holes (35). Moreover, in this way the fine powder dispersion is considerably reduced also on the conveyor belt (10) and on the processing devices located downstream with respect to said machine for processing slag (1).

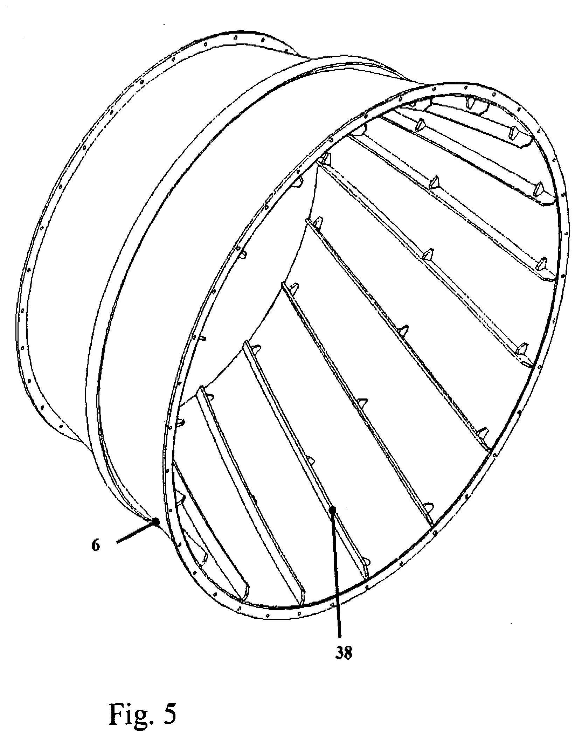

The movement of the ladle slag (17) inside the rotating drum (6) is further favoured (Fig. 5) by proper circumferential blades (38) located on the internal surface of said rotating drum (6). Said blades (38) can be straight or inclined or helically shaped. Miscellaneous solutions are also possible, some blades being straight and some blades being inclined or helically shaped. The presence of circumferential blades which are inclined or helically shaped with respect to the circumferential direction for example by an angle greater than the angle "a" relative to the inclination of said rotating drum (6) also allows the lifting of the material inside the rotating drum (6) by means of the inversion of the rotation motion of the same, this arrangement allowing a greater flexibility of the process that can be repeated for a certain number of cycles until the desired final quality is obtained.

In general, therefore, the machine for processing ladle slag according to the present invention includes a rotating drum (6) supported by idle wheels (33) which allow its rotation on its rotation axis (34), the ground support of said idle wheels (33) comprising a weighing system (9) made by means of load cells, the rotation of said rotating drum (6) occurring by means of rotation control means (5), said rotating drum (6) being internally hollow, a circular base of said rotating drum (6) being the rear exit throat (37) which is closed by means of an openable door (11) integral with said rotating drum (6) and the other circular base (29) of said rotating drum (6) being the charging throat of the material to be processed which is closed by a charging cover (2) movable between at least two positions, one position of which is an open position intended to allow the material charging and a closed position intended to seal said rotating drum (6), said rotation axis (34) being inclined by an angle "a" with respect to the ground, the outside shell of said rotating drum (6) being cooled by means of convection and radiation, said rotating drum (6) comprising calibrated holes (35) in correspondence of the portion close to said rear exit throat (37), the ladle slag (17) being introduced through said circular base (29) of introduction into the rotating drum (6) and being allowed to slake by means of the movement impressed by said rotating drum (6), cooling and airflow introduced in correspondence of said rear exit throat (37) and sucked by means of said fume hood (4) by said calibrated holes (35), the processed material advancing in said rotating drum (6) both by gravity effect and due to the pushing effect given by the upstream material, the downward sliding of the material being also favoured by the continuous rotation action of the rotating drum (6) and by circumferential blades (38) located in correspondence of at least one part of the internal surface of said rotating drum (6), the slaked material (18) coming out of said calibrated holes (35), the crusts (19) being extracted by opening the door (11).

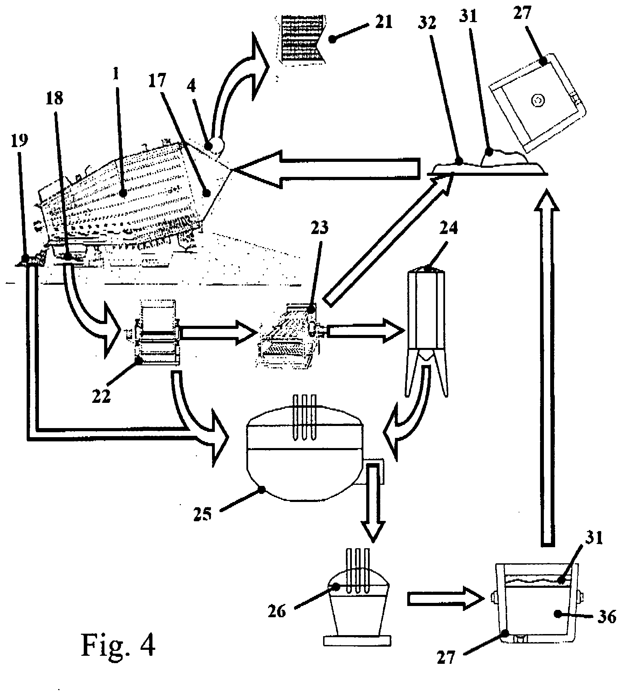

The weighing system (9) provides the indications relative to the progress of the processing cycle, because, by monitoring the progressively decreasing weight of the material contained inside the rotating drum (6) starting from the moment of the initial charging, the end of the recovery process of the separated material is individuated, for example when the measured weight decrease stops or when the trend of the weight decrease is stabilized on particularly low values. Moreover, the weighing system (9) provides the indications related to the amount of material remaining inside the rotating drum (6) in the form of crusts (19) and, therefore, it also provides indications about the need to extract said crusts (19) by opening the door (11).
Considering the whole plant for the recovery and recycling of the separated material by means of the machine for processing ladle slag (1) according to the present invention (Fig. 4) the ladle slag (31) (27) is poured on a bed (32) of material in size which acts as support and precludes phenomena relative to adhesion on the floor. After solidification, for example after three or four castings, the slag (31) and part of the material constituting the bed (32) are evacuated, for example by means of a mechanical digger and introduced into the rotating drum (6) where the separation occurs as previously described. The crusts (19) are used as a charging material for the furnace (25) together with other materials, for example in the form of metal scrap (not represented). The slaked material (18) extracted through the calibrated holes of the rotating drum (6) is conveyed by means of the closed conveyor belt (10) to a magnetic separator (22) which allows an additional metallic material recovery which can in turn be successively used as charging material for the furnace (25).

The remaining material, essentially consisting of calcium and magnesium oxides together with other compounds is sent to a vibrating screen (23). After the vibrating screen operation a sub-screened material comes out, for example with a size of the screened material smaller than 6 mm, which constitutes a basic mixture which is stored in silos (24) for the following introduction into the furnace (25) as a material completely or partially replacing the lime in the process relative to steel-making in the electric arc furnace acting as a slaging material. The over-screened material coming from the vibrating screen operation, for example with a size of the screened material between 6 and 100 mm, is recycled to form the bed (32) on which the hot slag (31) is poured from the ladle (27). From the storage silos (24) the basic mixture can be insufflated into the furnace (25), when necessary, for example under the slag, by means of a pneumatic system provided with lances. Periodically a tapping from the furnace into an empty ladle will occur, the ladle possibly being sent to a refining furnace (26). From the ladle (27) the molten steel (36) will be tapped, for example on a casting machine (not shown) and at the end of the casting the slag (31) together with dregs of molten steel will remain inside the ladle (27). At this point the ladle (27) is again sent to the zone where the emptying phase of the slag (31) from the ladle (27) on the bed (32), closing the loop-cycle of the process which will begin again with a new charging in the rotating drum (6).

The fumes sucked by the fume hood (4) are instead sent to a filter (21) for the recovery of fine powders, avoiding their dispersion in the environment.

The speed and the rotation direction of the rotating drum (6) and the inclination of the rotating drum (6), if an adjusting system of the inclination of the rotating drum (6) is provided, can be controlled according to the slag type to be processed, such as chemical composition and quantity of residues and metallic crusts, charging temperature of the slag introduced into the rotating drum (6), internal temperature of the rotating drum (6) detected by means of thermal sensors (not represented), weight of the material contained inside the rotating drum (6) detected by means of the weighing system (9), more or less precise and/or fast desired degree of selection of the material, etc.

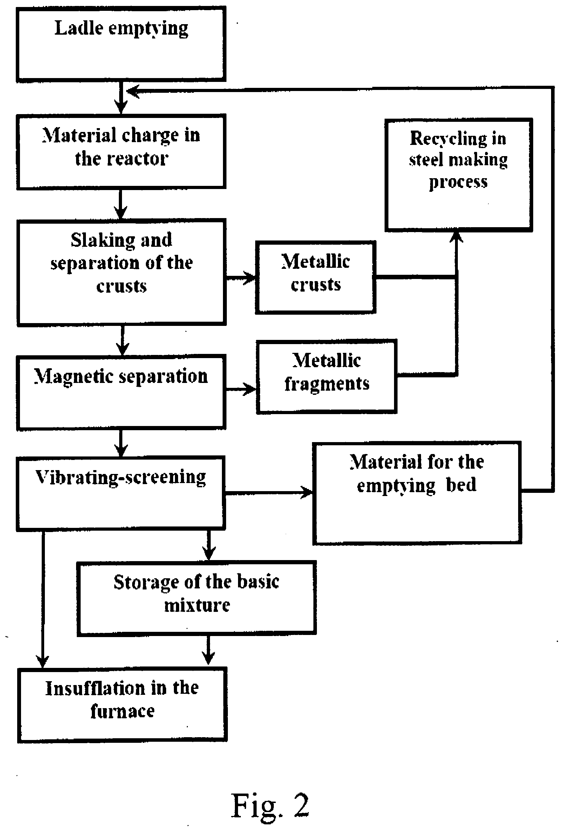

The method for processing ladle slag according to the present invention occurs (Fig. 2) according to the following steps:
- emptying the residue material present in the ladle on a bed consisting of recycled materials;
- at least partial solidification of the poured residue material;
- introduction of the at least partially solidified material inside a confined environment consisting of a rotating drum;
- slaking and disintegrating the residue material inside the confined environment consisting of the rotating drum cooling the induced material by means of an airflow sucked from the external environment and by a possible cooling system of said rotating drum;
- separating the pulverulent part and metallic crusts of the residue material by means of rotation of said residue material within said confined environment consisting of the rotating drum;
- conveying the pulverulent part in a closed and controlled way with respect to the surrounding environment;
- recovering the metallic crusts of the residue material to subsequently recycle them inside the furnace;
- separating the ferrous fraction having smaller size by means of magnetic separation to subsequently recycle it inside the furnace;
- separating by means of vibrating-screening the pieces having a bigger size than the injectable one to obtain the material for the recycled material bed and separation of the injectable material;
- conveying the injectable material in a closed and controlled way with respect to the surrounding environment;
- possible storage of the injectable material;
- insufflating the injectable material in the furnace.

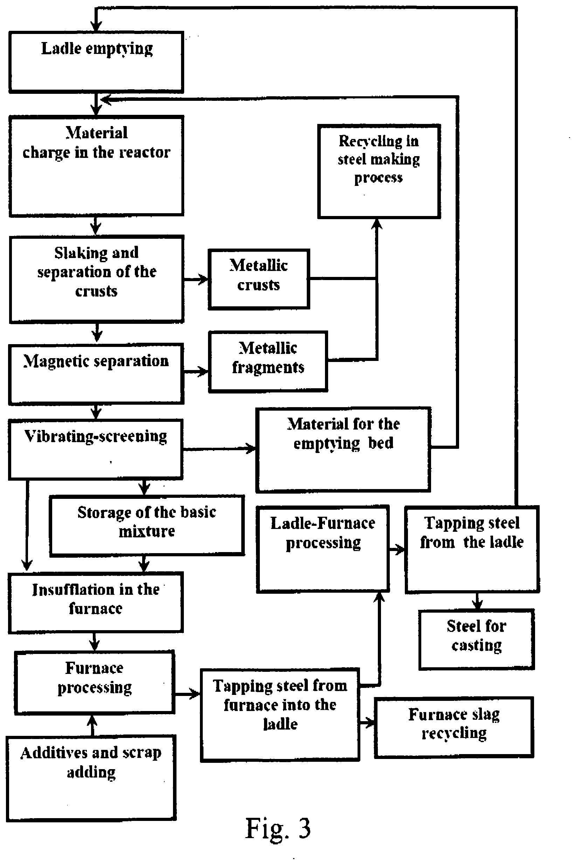

The whole steel making process including the method for processing ladle slag according to the present invention occurs (Fig. 3) according to the following steps:
- emptying the residue material present in the ladle on a bed consisting of recycled materials;
- at least partial solidification of the poured residue material;
- introduction of the at least partially solidified material inside a confined environment consisting of a rotating drum;
- slaking and disintegrating the residue material inside the confined environment consisting of the rotating drum cooling the induced material by means of an airflow sucked from the external environment and by a possible cooling system of said rotating drum;
- separating the pulverulent part and metallic crusts of the residue material by means of rotation of said residue material within said confined environment consisting of the rotating drum;
- conveying the pulverulent part in a closed and controlled way with respect to the surrounding environment;
- recovering the metallic crusts of the residue material to subsequently recycle them inside the furnace;
- separating the ferrous fraction having smaller size by means of magnetic separation to subsequently recycle it inside the furnace;
- separating by means of vibrating-screening the pieces having a bigger size than the injectable one to obtain the material for the recycled material bed and separation of the injectable material;
- conveying the injectable material in a closed and controlled way with respect to the surrounding environment;
- possible storage of the injectable material;
- insufflating the injectable material in the furnace;
- adding the scrap and the additives in the furnace;
- processing in the furnace to obtain the desired steel composition;
- tapping of the steel from the furnace into the ladle;
- processing and recycling of the furnace slag or black slag;
- refining the composition in the ladle furnace;
- Tapping of the steel from the ladle to cast the steel;
- repeating the previous steps.

As one can understand from the previous description of the methods for processing ladle slag and of the steel making processes which in turn, in addition to the method for processing ladle slag or white slag, also provides the method for processing furnace slag or black slag, the present invention allows an effective solution to the problem of the recycling of slag produced by the steel plants with the objective to reduce down to a complete suppression the production of slag to be sent to a dumpsite. Advantageously the present invention provides a compact, new and inventive solution to the problem of ladle slag or white slag processing which allows its application also in the cases in which the available space in the plant does not allow the setting up of an installation for processing slag of the prior art.

Moreover, always due to the compactness of the solution according to the present invention, the setting up of the machine for processing slag and of the relative installation as a whole can occur in the most appropriate zone to reduce both the length of the transportation paths of the residue material of the ladles from the ladle emptying site to the machine/installation for processing and the length of the paths to be covered by the treated material after the processing. This besides having an immediate consequence on the overall costs of the installation for processing, because of the reduction of the necessary conveying systems and/or their length, also has big benefits from the environmental and operator's health point of view because of the reduction of the powder dispersion in the environment, which could occur above all during the transportation phase of the material to be processed. The solution according to the present invention, in fact, due to its compactness with respect to the prior art plants, allows the installation in correspondence of the site where the ladle emptying occurs, de facto eliminating the need to transport the material to be processed.

Moreover, the arrangement of the recycling installation according to the present invention also allows an optimal positioning of the devices located downstream with respect to the machine for processing ladle slag (1) according to the present invention eliminating the need for transportation paths of the processed material to be sent to the furnace.

Making the installation in correspondence of the site where the ladle emptying phase occurs, said installation can moreover be done inside an existing building, therefore involving further benefits from the economical point of view.

Moreover, a considerable cost reduction is also present because the machine for processing ladle slag according to the present invention does not require the construction of complex carpentries and metallic structures as, on the other hand, is required by the ladle slag recycling plants of the prior art which are provided with complex series of big closed hoppers internally equipped with grids.

Moreover the machine according to the present invention considerably reduces the problems of the prior art plants relative to the adhesion of the slag, still hot and partially solidified because, being the rotating drum (6) in continuous rotation during the processing, the phenomena of adhesion to the internal walls are avoided without requiring further material mixing devices as required by the hoppers of the processing plants of the prior art.

Also the separation and selection process of the materials contained in the slag is more efficient with respect to the prior art systems, because the continuous rotation of the rotating drum induces a continuous rotation of the contained material which undergoes continuous impacts with other materials and with the internal walls of the rotating drum (6) favouring a more efficient reduction of the size of the processed material, a more efficient separation of the material and also a better slaking of the same due to the continuous and uniform internal mixing which allows a proper cooling and exposure to the internal airflow induced by the fume hood (4).

Again from the efficiency point of view of the method for separating ladle slag according to the present invention, a more effective separation of the crusts and of the fine powders from the recovered material on the conveyor belt occurs with respect to the prior art systems, because the continuous mixing of the material simultaneously exposed to the internal airflow induced by the fume hood (4) allows the recovery of all the fine powders, contrary to the prior art systems in which a substantial part of the fine powders is anyhow conveyed with the recovered material because the fine powders remain trapped between the bigger sized material conveyed inside the hopper.

Moreover, the blades (38) increase the material mixing effect favouring impacts causing the break of the material in smaller and easily recyclable parts also favouring the slaking and fine powder recovery process.

The description of this invention has been made with reference to the enclosed figures showing a preferred embodiment of the invention itself, but it is evident that many possible alterations, modifications and variations will be immediately apparent to those skilled in the art in light of the foregoing description. Thus, it should be understood that the invention is not limited by the foregoing description, but embraces all such alterations, modifications and variations in accordance with the spirit and scope of the appended claims.

### Used Nomenclature

With reference to the identification numbers reported in the enclosed figures, the following nomenclature has been used:
1. Machine for processing ladle slag
2. Charging cover
3. Charging channel
4. Fume hood
5. Rotation control means
6. Rotating drum
7. Cooling system
8. Collection basin
9. Weighing system
10. Conveyor belt
11. Door
12. Holed frusto-conical part
13. Closed frusto-conical part
14. Frusto-conical part
15. Cylindrical part
16. Charging ramp
17. Material to be treated or charged material or slag
18. Extracted material or slaked material
19. Extracted crusts
20. Wall plug
21. Filter
22. Magnetic separator
23. Screening device
24. Silos
25. Furnace
26. Refining furnace or ladle furnace
27. Ladle
28. Bigger base of the frusto-conical part
29. Circular base
30. Coupling
31. Slag
32. Bed
33. Wheels
34. Rotation axis
35. Calibrated holes
36. Molten steel
37. Rear exit throat
38. Blade

## Claims

1. Method for processing ladle (27) slag including the following steps:
- emptying the residue material present in the ladle (27) on a bed (32) consisting of recycled over-screened materials recovered from the slag;
- at least partial solidification of the poured residue material;
- introduction of the at least partially solidified material inside a confined environment consisting of a rotating drum (6);
the method further including the following steps
- slaking and disintegrating the residue material inside the confined environment consisting of the rotating drum (6) cooling the induced material by means of an air flow;
- separating the pulverulent part and metallic crusts (19) of the residue material by means of rotation of said residue material within said confined environment consisting of the rotating drum (6), the method being **characterized in that** the slaked material (18) comes out of calibrated holes (35) located at the end part of said rotating drum (6), the metallic crusts remains inside said rotating drum (6)
- conveying the pulverulent part in a closed and controlled way with respect to the surrounding environment;
- recovering the metallic crusts (19) of the residue material to subsequently recycle them inside an EAF furnace (25);
- separating the ferrous fraction having smaller size by means of magnetic separation to subsequently recycle it inside said EAF furnace (25);
- separating by means of vibrating-screening (23) the pieces having a bigger size than the injectable one to obtain the material for the recycled material bed (32) and separation of the injectable material;
- conveying the injectable material in a closed and controlled way with respect to the surrounding environment;
- insufflating the injectable material in said EAF furnace (25);
said method further including a storage phase of the injectable material before the phase relative to the insufflation of said material in said EAF furnace (25) wherein said slaking and disintegrating step of the residue material inside the confined environment consisting of the rotating drum (6) cooling the induced material by means of an air flow occurs by means of air sucked from the external environment by a fume hood (4) through calibrated holes (35) located at the end part of said rotating drum (6) and by a possible cooling system (7) of said rotating drum (6), said air flow sucked from the external environment recovers fine powders and avoids their dispersion in the environment.

2. Rotating drum (6) for processing ladle slag supported by idle wheels (33) which allow its rotation on its rotation axis (34), the rotation of said rotating drum (6) occurring by means of rotation control means (5), said rotating drum (6) being internally hollow, a circular base of said rotating drum (6) being the rear exit throat (37) which is closed by means of an openable door (11) integral with said rotating drum (6) and the other circular base (29) of said rotating drum (6) being the charging throat of the material to be processed which is closed by a charging cover (2) movable between at least two positions, one position of which is an open position intended to allow the charging of the material and a closed position intended to seal said rotating drum (6), said rotation axis (34) being inclined by an angle "a" with respect to the ground, the outside shell of said rotating drum (6) being cooled by means of convection and radiation, said rotating drum (6) comprising said calibrated holes (35) in correspondence of the portion close to said rear exit throat (37), in which the ladle slag (17) is introduced through said circular base (29) of introduction into in the rotating drum (6) and it is allowed to slake by means of the movement impressed by said rotating drum (6), the processed material advancing in said rotating drum (6) both by gravity effect and due to the pushing effect given by the upstream material, the downward sliding of the material being favoured also by the continuous rotation action of the rotating drum (6) and by circumferential blades (38) located in correspondence of at least one part of the internal surface of said rotating drum (6), the slaked material (18) coming out of said calibrated holes (35), the crusts (19) being extracted by opening the door (11), **characterized in that** the ground support of said idle wheels (33) comprises a weighing system (9) made by means of load cells-and further **characterised in that** the part of said rotating drum (6) on which said calibrated holes (35) are present is enclosed within a sheet wall plug (20), said wall plug being interrupted only in the lower portion of said rotating drum (6), said airflow introduced in correspondence of said rear exit throat (37) being sucked by means of said fume hood (4) by said calibrated holes (35), said air flow sucked from the external environment recovering fine powders and avoids their dispersion in the environment.

3. Rotating drum according to claim 2 and suitable for performing the method according to claim 1 **characterised in that** it includes a cooling system (7) cooling at least one portion of the shell of said rotating drum (6).

4. Rotating drum according to any of the claims 2 to 3 **characterised in that** said rotating drum (6) consists of an internally hollow cylindrical part (15) and a internally hollow frusto-conical part (14) with parallel bases having a circular base, the diameter of the bigger circular base (28) of said frusto-conical part (14) being equal to the diameter of the cylindrical part (15), said bigger circular base (28) of said frusto-conical part (14) being welded at one of the circular bases of said cylindrical part (15), said cylindrical part (15) and said frusto-conical part (14) being thus integral with each other, the central axis of said cylindrical part (15) and the central axis of said frusto-conical part (14) being coincident and constituting the rotation axis (34) of said rotating drum (6).

5. Rotating drum according to claim 2 **characterised in that** said angle "a" relative to the inclination of said rotation axis (34) with respect to the ground, is equal to half of the opening angle of the cone corresponding to said frusto-conical part (14), the side surface of the frusto-conical part (14) being parallel to the ground at its lower portion.

6. Rotating drum according to any of the previous claims 2 to 5 **characterised in that** it includes a fume hood (4) located on the upper part and near said circular base (29) for charging the material.

7. Rotating drum according to claim 6 **characterised in that** said fume hood (4) is placed on the upper part and integral with said charging cover (2).

8. Rotating drum according to any of the previous claims 2 to 4, 6 to 7 **characterised in that** the rotating drum (1) as a whole is supported by means intended to allow the variation of said of the angle "a" relative to the inclination of the rotation axis (34) with respect to the ground, the inclination variation being function of the type and quantity of the slag to be processed, of the signals from said weighing system (9), of the more or less precise desired degree of selection of the material.

9. Machine for processing ladle slag according to any of the previous claims 2 to 8 **characterised in that** said rotation control means (5) are a toothed crown traction system surrounding the rotating drum (6).

10. Rotating drum according to any of the previous claims 2 to 9 **characterised in that** the rotation speed of the rotating drum (6) is variable according to the type and quantity of the slag to be processed, the signals from said weighing system (9), the more or less precise desired degree of selection of the material.

11. Installation for processing ladle slag suitable for performing the method according to claim 1 **characterized in that** it includes a rotating drum (1) for processing ladle slag according to claim 2, said installation including a coupling (30) between said rotating drum (6) and a fixed charging channel (3), said coupling (30) being such as to allow the free rotation of said rotating drum (6) with respect to said fixed charging channel (3), at least one underlying conveyor belt (10) located below said rotating drum (6) in correspondence of said calibrated holes (35), said conveyor belt (10) being a closed conveyor belt along at least one portion of its transportation path between the point below the rotating drum (6) and the downstream discharge point, a magnetic separator (22), a vibrating screen (23), said installation further including a silos (24) for storing the processed material, the fumes sucked by said fume hood (4) being sent to a filter (21) for the recovery of fine powders preventing their dispersion in the environment.

## Patentansprüche

1. Verfahren zur Verarbeitung von Pfannen (27) - Schlacke, die folgende Phasen umfasst:
- Leeren des Rückstandsmaterials in der Pfanne (27) auf ein Bett (32), bestehend aus wiederaufbereiteten ausgesiebten Materialien, die aus der Schlacke zurückgewonnen werden;
- mindestens teilweise Erstarrung des ausgegossenen Rückstandsmaterials;
- Einführung des zumindest teilweise erstarrten Materials in eine geschlossene Umgebung, bestehend aus einer Drehtrommel (6);
wobei das Verfahren des weiteren die folgenden Phasen umfasst:
- Zerstäuben und Zersetzen des Rückstandsmaterials in der geschlossenen Umgebung bestehend aus der Drehtrommel (6) mit Abkühlen des induzierten Materials mittels eines Luftstroms;
- Trennung des pulverförmigen Teils und metallischer Krusten (19) des Rückstandsmaterials mittels Drehung des Rückstandsmaterials in der geschlossenen Umgebung bestehend aus der Drehtrommel (6), wobei das Verfahren **dadurch gekennzeichnet ist, dass** das zerstäubte Material (18) aus kalibrierten Löchern (35) am Endteil der besagten Drehtrommel (6) kommt, die metallischen Krusten bleiben in besagter Drehtrommel (6);
- Beförderung des pulverförmigen Teils auf geschlossene und kontrollierte Art in Bezug auf die Umgebung;
- Rückgewinnung der metallischen Krusten (19) des Rückstandsmaterials, um sie anschließend in einem EAF-Ofen (25) zu recyceln;
- Trennung der Eisen(II)fraktion kleinerer Größe mittels magnetischer Trennung, um sie anschließend in besagtem EAF-Ofen (25) zu recyceln;
- Trennung mittels Schwingsieben (23) der Stücke mit größerer Größe als die einspritzfähigen, um das Material für das wiederaufbereitete Materialbett (32) zu erhalten, und Trennung des einspritzfähigen Materials;
- Beförderung des einspritzfähigen Materials auf geschlossene und kontrollierte Art in Bezug auf die Umgebung;
- Einblasen des einspritzfähigen Materials in besagten EAF-Ofen (25); besagtes Verfahren umfasst des weiteren eine Speicherphase des einspritzfähigen Materials vor der Phase des Einblasens des Materials in besagten EAF-Ofen (25), wobei besagte Zerstäubungs- und Zersetzungsphase des Rückstandsmaterials in der geschlossenen Umgebung bestehend aus der Drehtrommel (6) mit Abkühlen des induzierten Materials mittels eines Luftstroms durch Luft erfolgt, die von der äußeren Umgebung von einer Abzugshaube (4) durch kalibrierte Löcher (35) angesaugt wird, die an dem Endteil der Drehtrommel (6) positioniert sind, und durch ein eventuelles Kühlsystem (7) der Drehtrommel (6), besagter Luftstrom, der von der äußeren Umgebung angesaugt wird, gewinnt feine Pulver wieder und vermeidet ihre Dispersion in die Umgebung.

2. Drehtrommel (6) zur Verarbeitung von Pfannenschlacke, von Leerlaufrädern (33) getragen, die ihre Drehung auf ihrer Drehachse (34) erlauben, die Drehung der Drehtrommel (6) erfolgt mittels Drehungssteuermittel (5), besagte Drehtrommel (6) ist innen hohl, eine runde Basis der besagten Drehtrommel (6) ist der rückwärtige Austrittsmund (37), der mittels einer zu öffnenden Tür (11), die einstückig mit besagter Drehtrommel (6) ist, geschlossen wird, und die andere runde Basis (29) der Drehtrommel (6) ist der Lademund für das zu verarbeitende Material, der von einem Ladedeckel (2) geschlossen wird, der zwischen mindestens zwei Positionen beweglich ist, von denen eine offen ist, zwecks Ladung des Materials, und eine geschlossene, um besagte Drehtrommel (6) abzudichten, besagte Drehachse (34) ist um einen Winkel "a" in Bezug auf den Boden geneigt, die Außenschale der besagten Drehtrommel (6) wird mittels Konvektion und Strahlung gekühlt, besagte Drehtrommel (6) umfasst besagte kalibrierte Löcher (35) an dem Teil nahe besagtem rückwärtigen Austrittsmund (37), wobei die Pfannenschlacke (17) durch besagte runde Basis (29) zur Einführung in die Drehtrommel (6) eingeführt wird und zerstäuben gelassen wird, mittels der Bewegung besagter Drehtrommel (6), das verarbeitete Material rückt in besagter Drehtrommel (6) sowohl durch die Wirkung der Schwerkraft vor, als auch aufgrund der Schiebewirkung des vorgeschalteten Materials, das Heruntergleiten des Materials wird auch von der kontinuierlichen Drehung der Drehtrommel (6) begünstigt und von Umfangsschneiden (38) an mindestens einem Teil der Innenfläche der besagten Drehtrommel (6), das zerstäubte Material (18) kommt aus besagten kalibrierten Löchern (35), wobei die Krusten (19) durch Öffnen des Tür (11) herausgezogen werden, **gekennzeichnet dadurch, dass** die Bodenunterstützung der besagten Leerlaufräder (33) ein Wiegesystem (9) umfasst, hergestellt mittels Ladezellen, und weiter **gekennzeichnet dadurch, dass** der Teil besagter Drehtrommel (6), auf dem besagte kalibrierte Löcher (35) vorhanden sind, in einer Wandverkleidungsabdichtung (20) eingeschlossen ist, besagte Wandabdichtung ist nur in dem unteren Teil der besagten Drehtrommel (6) unterbrochen, besagter Luftstrom, der an besagtem rückwärtigen Austrittsmund (37) eingeführt wird, wird mittels besagter Abzugshaube (4) von besagten kalibrierten Löchern (35) angesaugt, besagter Luftstrom, der von außen angesaugt wird, gewinnt feine Pulver wieder und vermeidet ihre Dispersion in der Umgebung.

3. Drehtrommel nach Anspruch 2, geeignet zum Durchführen des Verfahrens nach Anspruch 1, **gekennzeichnet dadurch, dass** sie ein Kühlsystem (7) umfasst, das mindestens einen Teil der Schale der besagten Drehtrommel (6) kühlt.

4. Drehtrommel nach einem beliebigen der Ansprüche 2 bis 3, **gekennzeichnet dadurch, dass** die Drehtrommel (6) aus einem innen hohlen zylindrischen Teil (15) und einem innen hohlen kegelstumpfförmigen Teil (14) mit parallelen Basen besteht, die eine runde Basis umfassen, wobei der Durchmesser der größeren runden Basis (28) des besagten kegelstumpfförmigen Teils (14) gleich dem Durchmesser des zylindrischen Teils (15) ist, besagte größere runde Basis (28) des besagten kegelstumpfförmigen Teils (14) ist an eine der runden Basen des besagten zylindrischen Teils (15) geschweißt, besagtes zylindrische Teil (15) und besagtes kegelstumpfförmige Teil (14) sind also miteinander verbunden, die zentrale Achse des besagten zylindrischen Teils (15) und die zentrale Achse des besagten kegelstumpfförmigen Teils (14) fallen zusammen und bilden die Drehachse (34) der besagten Drehtrommel (6).

5. Drehtrommel nach Anspruch 2, **gekennzeichnet dadurch, dass** der Winkel "a" in Bezug auf die Neigung der besagten Drehachse (34) in Bezug auf den Boden gleich der Hälfte des Öffnungswinkels des Konus ist, der besagtem kegelstumpfförmigen Teil (14) entspricht, die Seitenfläche des kegelstumpfförmigen Teils (14) ist parallel zu dem Boden an seiner unteren Portion.

6. Drehtrommel nach einem beliebigen der vorherigen Ansprüche 2 bis 5, **gekennzeichnet dadurch, dass** sie eine Abzugshaube (4) auf dem oberen Teil umfasst, nahe besagter runden Basis (29) zum Laden des Materials.

7. Drehtrommel nach Anspruch 6, **gekennzeichnet dadurch, dass** die Abzugshaube (4) auf dem oberen Teil gelegen und mit besagtem Ladedeckel (2) verbunden ist.

8. Drehtrommel nach einem beliebigen der vorherigen Ansprüche 2 bis 4, 6 bis 7, **gekennzeichnet dadurch, dass** die Drehtrommel (1) als Ganzes von Mitteln gestützt wird, die die Veränderung des besagten Winkels "a" in Bezug auf die Neigung der Drehachse (34) in Bezug auf den Boden erlauben, die Neigungsveränderung hängt ab von Art und Menge der Schlacke, die verarbeitet werden soll, von den Signalen von besagtem Wiegesystem (9) und von dem mehr oder weniger genauen gewünschten Selektionsgrad des Materials.

9. Maschine zur Verarbeitung von Pfannenschlacke nach einem beliebigen der vorherigen Ansprüche 2 bis 8, **gekennzeichnet dadurch, dass** die Drehungssteuermittel (5) ein Zahnkronenzugsystem sind, das die Drehtrommel (6) umgibt.

10. Drehtrommel nach einem beliebigen der vorherigen Ansprüche 2 bis 9, **gekennzeichnet dadurch, dass** die Drehzahl der Drehtrommel (6) veränderlich ist, je nach Art und Menge der Schlacke, die verarbeitet werden soll, nach den Signalen von besagtem Wiegesystem (9) und nach dem mehr oder weniger genauen gewünschten Selektionsgrad des Materials..

11. Anlage zur Verarbeitung von Pfannenschlacke geeignet zum Durchführen des Verfahrens nach Anspruch 1, **gekennzeichnet dadurch, dass** sie eine Drehtrommel (1) zur Verarbeitung von Pfannenschlacke nach Anspruch 2 umfasst, wobei besagte Anlage eine Kupplung (30) zwischen besagter Drehtrommel (6) und einem befestigten Ladekanal (3) umfasst, besagte Kupplung (30) erlaubt die freie Drehung der besagten Drehtrommel (6) in Bezug auf besagten befestigten Ladungskanal (3), mindestens ein darunterliegender Bandförderer (10) ist unter der Drehtrommel (6) an besagten kalibrierten Löchern (35) positioniert, besagter Bandförderer (10) ist entlang mindestens eines Teils seiner Transportbahn zwischen dem Punkt unterhalb der Drehtrommel (6) und der nachgeschalteten Entladestelle ein geschlossener Bandförderer, einen Magnetscheider (22), ein Schwingsieb (23), wobei besagte Anlage des weiteren ein Silo (24) zum Speichern des verarbeiteten Materials umfasst, wobei die Rauchgase, die von besagter Abzugshaube (4) angesaugt werden, zu einem Filter (21) für die Rückgewinnung von feinen Pulvern gesandt werden, was ihre Dispersion in die Umgebung verhindert.

## Revendications

1. Méthode pour traiter les scories d'une poche (27) comprenant les phases suivantes :
- vidage du matériau résiduel présent dans la poche (27) sur un lit (32) composé de matériaux filtrés recyclés récupérés des scories ;
- solidification au moins partielle du matériau résiduel versé ;
- introduction du matériau au moins partiellement solidifié dans un environnement confiné composé d'un tambour rotatif (6) ;
la méthode comprenant en outre les phases suivantes
- décomposer et désintégrer le matériau résiduel dans l'environnement confiné composé du tambour rotatif (6) refroidissant le matériau induit au moyen d'un écoulement d'air ;
- séparer la partie pulvérulente et les croûtes métalliques (19) du matériau résiduel au moyen de la rotation dudit matériau résiduel dans ledit environnement confiné composé du tambour rotatif (6), la méthode étant **caractérisée en ce que** le matériau décomposé (18) sort par les trous calibrés (35) placés dans la partie d'extrémité dudit tambour rotatif (6), les croûtes métalliques restent à l'intérieur dudit tambour rotatif (6)
- transporter la partie pulvérulente d'une façon fermée et contrôlée par rapport à l'environnement entourant ;
- récupérer les croûtes métalliques (19) du matériau résiduel afin de les recycler ensuite dans un four électrique à arc (25) ;
- séparer la fraction ferreuse ayant une dimension plus petite au moyen de séparation magnétique afin de la recycler ensuite dans ledit four électrique à arc (25) ;
- séparer au moyen de vibration-filtrage (23) les pièces ayant une dimension plus grande que celle injectable pour obtenir le matériau pour le lit de matériau recyclé (32) et séparation du matériau injectable ;
- transporter le matériau injectable d'une façon fermée et contrôlée par rapport à l'environnement entourant ;
- insuffler le matériau injectable dans ledit four électrique à arc (25) ;
ladite méthode comprenant en outre une phase de stockage du matériau injectable avant la phase relative à l'insufflation dudit matériau dans ledit four électrique à arc (25) où ladite phase de décomposition et désintégration du matériau résiduel dans l'environnement confiné composé du tambour rotatif (6) refroidissant le matériau induit au moyen d'un écoulement d'air a lieu au moyen de l'air aspiré de l'environnement externe par une hotte aspirante (4) à travers des trous calibrés (35) placés dans la partie d'extrémité dudit tambour rotatif (6) et par un possible système de refroidissement (7) dudit tambour rotatif (6), ledit écoulement d'air aspiré de l'environnement externe récupère des poudres fines et évite leur dispersion dans l'environnement.

2. Tambour rotatif (6) pour traiter les scories d'une poche supporté par des roues inactives (33) qui permettent sa rotation sur son axe de rotation (34), la rotation dudit tambour rotatif (6) ayant lieu au moyen de moyens de contrôle de rotation (5), ledit tambour rotatif (6) étant internement creux, une base circulaire dudit tambour rotatif (6) étant la bouche de sortie postérieure (37) qui est fermée au moyen d'une porte ouvrable (11) solidaire dudit tambour rotatif (6) et l'autre base circulaire (29) dudit tambour rotatif (6) étant la bouche de chargement du matériau à traiter qui est fermée par une couverture de chargement (2) mobile entre au moins deux positions, dont une position est une position ouverte destinée à permettre le chargement du matériau et une position fermée destinée à sceller ledit tambour rotatif (6), ledit axe de rotation (34) étant incliné d'un angle "a" par rapport au sol, le boîtier extérieur dudit tambour rotatif (6) étant refroidi au moyen de convection et radiation, ledit tambour rotatif (6) comprenant lesdits trous calibrés (35) en correspondance avec la partie proche de ladite bouche de sortie postérieure (37), où les scories d'une poche (17) sont introduites à travers ladite base circulaire (29) d'introduction dans le tambour rotatif (6) et sont laissées se décomposer au moyen du mouvement imprimé par ledit tambour rotatif (6), le matériau traité avançant dans ledit tambour rotatif (6) par l'effet de gravité aussi bien qu'à cause de l'effet de poussée donné par le matériau en amont, le glissement vers le bas du matériau étant favorisé également par l'action de rotation continue du tambour rotatif (6) et par des lames circonférentielles (38) situées en correspondance avec au moins une partie de la surface interne dudit tambour rotatif (6), le matériau décomposé (18) sortant par lesdits trous calibrés (35), les croûtes (19) étant extraites ouvrant la porte (11), **caractérisé en ce que** le support au sol desdites roues inactives (33) comprend un système de pesage (9) fait au moyen de cellules de charge et en outre **caractérisé en ce que** la partie dudit tambour rotatif (6) sur laquelle lesdits trous calibrés (35) sont présents est renfermée dans une fermeture étanche de revêtement de paroi (20), ladite fermeture étanche étant interrompue seulement dans la partie inférieure dudit tambour rotatif (6), ledit écoulement d'air introduit en correspondance avec ladite bouche de sortie postérieure (37) étant aspiré au moyen de ladite hotte aspirante (4) par lesdits trous calibrés (35), ledit écoulement d'air aspiré de l'environnement externe récupérant des poudres fines et évitant leur dispersion dans l'environnement.

3. Tambour rotatif selon la revendication 2 et apte à accomplir la méthode selon la revendication 1 **caractérisé en ce qu'**il comprend un système de refroidissement (7) refroidissant au moins une partie du boîtier dudit tambour rotatif (6).

4. Tambour rotatif selon l'une quelconque des revendications 2 à 3 **caractérisé en ce que** ledit tambour rotatif (6) consiste en une partie cylindrique internement creuse (15) et une partie tronconique internement creuse (14) avec des bases parallèles ayant une base circulaire, le diamètre de la base circulaire plus grande (28) de ladite partie tronconique (14) étant égal au diamètre de la partie cylindrique (15), ladite base circulaire plus grande (28) de ladite partie tronconique (14) étant soudée à l'une des bases circulaires de ladite partie cylindrique (15), ladite partie cylindrique (15) et ladite partie tronconique (14) étant ainsi solidaires l'une de l'autre, l'axe central de ladite partie cylindrique (15) et l'axe central de ladite partie tronconique (14) étant coïncidents et constituant l'axe de rotation (34) dudit tambour rotatif (6).

5. Tambour rotatif selon la revendication 2 **caractérisé en ce que** ledit angle "a" relatif à l'inclination dudit axe de rotation (34) par rapport au sol est égal à la moitié de l'angle d'ouverture du cône correspondant à ladite partie tronconique (14), la surface latérale de la partie tronconique (14) étant parallèle au sol dans sa partie inférieure.

6. Tambour rotatif selon l'une quelconque des revendications précédentes 2 à 5 **caractérisé en ce qu'**il comprend une hotte aspirante (4) située sur la partie supérieure et près de ladite base circulaire (29) pour charger le matériau.

7. Tambour rotatif selon la revendication 6 **caractérisé en ce que** ladite hotte aspirante (4) est placée sur la partie supérieure et solidaire de ladite couverture de chargement (2).

8. Tambour rotatif selon l'une quelconque des revendications précédentes 2 à 4, 6 à 7 **caractérisé en ce que** le tambour rotatif (1) dans son ensemble est supporté par des moyens destinés à permettre la variation dudit angle "a" relatif à l'inclination de l'axe de rotation (34) par rapport au sol, la variation de l'inclination étant fonction du type et de la quantité de scories à traiter, des signaux dudit système de pesage (9), du degré désiré plus ou moins précis de sélection du matériau.

9. Machine pour traiter les scories d'une poche selon l'une quelconque des revendications précédentes 2 à 8 **caractérisée en ce que** lesdits moyens de contrôle de rotation (5) sont un système de traction à couronne dentée entourant le tambour rotatif (6).

10. Tambour rotatif selon l'une quelconque des revendications précédentes 2 à 9 **caractérisé en ce que** la vitesse de rotation du tambour rotatif (6) est variable selon le type et la quantité de scories à traiter, les signaux dudit système de pesage (9), le degré désiré plus ou moins précis de sélection du matériau.

11. Installation pour traiter les scories d'une poche apte à accomplir la méthode selon la revendication 1 **caractérisée en ce qu'**elle comprend un tambour rotatif (1) pour traiter les scories d'une poche selon la revendication 2, ladite installation comprenant un accouplement (30) entre ledit tambour rotatif (6) et un canal de chargement fixé (3), ledit accouplement (30) étant apte à permettre la rotation libre dudit tambour rotatif (6) par rapport audit canal de chargement fixé (3), au moins une bande transporteuse sous-jacente (10) située au-dessous dudit tambour rotatif (6) en correspondance avec lesdits trous calibrés (35), ladite bande transporteuse (10) étant une bande transporteuse fermée le long d'au moins une partie de son parcours de transport entre le point au-dessous du tambour rotatif (6) et le point de décharge en aval, un séparateur magnétique (22), un crible vibrant (23), ladite installation comprenant en outre un silo (24) pour stocker le matériau traité, les fumées aspirées par ladite hotte aspirante (4) étant envoyées à un filtre (21) pour la récupération de poudres fines évitant leur dispersion dans l'environnement.
